# FASCICULE DE BREVET EUROPEEN

(11) **EP 4 584 125 B1**
(45) Date de publication et mention de la délivrance du brevet: **30.09.2026**
(21) Numéro de dépôt: 23764963.7
(22) Date de dépôt: 07.09.2023
(51) Int. Cl.: B60Q 1/26, B60Q 1/32, B60Q 1/50

(54) **DISPOSITIF LUMINEUX POUR PROJETER UNE IMAGE SUR LE SOL AUTOUR D'UN VÉHICULE**
LICHTVORRICHTUNG ZUM PROJIZIEREN EINES BILDES AUF DEN BODEN UM EIN FAHRZEUG HERUM
LUMINOUS DEVICE FOR PROJECTING AN IMAGE ONTO THE GROUND AROUND A VEHICLE

(30) Priorité: 07.09.2022 FR 2208932
(43) Date de publication de la demande: 16.07.2025
(73) Titulaire: VALEO VISION, 93012 Bobigny Cedex (FR)
(72) Inventeur: BEDDAR, Sidahmed, 93012 BOBIGNY Cedex (FR); TALEB, Rabih, 93012 BOBIGNY Cedex (FR); LETOUMELIN, Remi, 93012 BOBIGNY Cedex (FR)
(74) Mandataire: Valeo Visibility
(86) Numéro de dépôt international: PCT/EP2023/074685
(87) Numéro de publication internationale: WO 2024/052509

(56) Documents cités:
- JP-A- 2015 221 659
- KR-A- 20190 071 524
- US-A1- 2017 158 120
- US-A1- 2020 326 048
- US-B2- 10 429 561

## Description

### Domaine technique de l'invention

L'invention concerne un dispositif lumineux pour un véhicule automobile, le dispositif lumineux étant configuré pour projeter sur le sol une image telle qu'un pictogramme. L'invention concerne aussi un procédé de fonctionnement d'un tel dispositif lumineux.

### Etat de la technique antérieure

Certains véhicules automobiles sont équipés d'un dispositif lumineux configuré pour projeter une image sur le sol autour du véhicule. Ces dispositifs lumineux comprennent une source lumineuse et une diapositive éclairée par la source lumineuse. Un faisceau lumineux issu de la diapositive est orienté vers le sol autour du véhicule. Les images ainsi projetées peuvent comprendre des pictogrammes destinés à fournir une information utile à un utilisateur. Par exemple, lorsque le véhicule est un véhicule électrique ou hybride rechargeable, l'image projetée au sol peut fournir une indication de l'état de charge d'une batterie du véhicule. Un pictogramme représentant l'état de charge d'une batterie peut classiquement comprendre la représentation schématique d'une pile pourvue de différents étages, ces étages étant représentés pleins ou vides en fonction de l'état de charge.

Afin d'améliorer l'effet visuel et la qualité des informations transmises à l'utilisateur, il est souhaitable d'animer les images projetées au sol. Par exemple, dans le cadre d'un pictogramme représentant l'état de charge d'une batterie, un étage peut être rendu clignotant afin d'indiquer qu'une recharge de la batterie est en cours. Afin d'animer l'image projetée au sol, on connaît des dispositifs lumineux pourvus d'une diapositive sous la forme d'un disque dont l'orientation est contrôlée par un moteur électrique. La diapositive comprend plusieurs motifs répartis sur différents secteurs, et destinés à être éclairés sélectivement par la source lumineuse en fonction de l'orientation de la diapositive. Une telle solution permet donc de faire varier l'image projetée en faisant tourner la diapositive. On parvient ainsi à produire une animation, notamment un effet clignotant de l'image projeté au sol. KR 2019 0071524 A montre un tel dispositif.

Toutefois, cette solution présente des inconvénients. En effet, l'orientation précise de la diapositive requiert l'utilisation d'un moteur électrique complexe. Lorsqu'un moteur électrique plus simple est utilisé, l'orientation de la diapositive est moins précise. Ceci a pour effet que les images successives projetées au sol peuvent être sensiblement décalées spatialement les unes par rapport aux autres. Ce décalage est particulièrement perceptible lorsque les images projetées successivement possèdent des parties communes. Ainsi, le rendu visuel d'un pictogramme comprenant des parties fixes et des parties clignotantes est particulièrement médiocre avec les dispositifs lumineux connus de l'état de la technique.

Les dispositifs lumineux connus de l'état de la technique présentent également l'inconvénient de requérir une diapositive de grande dimension afin d'y intégrer les différents motifs. L'encombrement du dispositif lumineux est ainsi augmenté et devient incompatible avec une intégration à des emplacements du véhicule dont le volume disponible est faible, comme par exemple au niveau d'un rétroviseur extérieur ou encore au niveau d'un seuil de porte du véhicule. La réduction des dimensions des motifs sur la diapositive conduit à la projection d'images trop petites et/ou floues.

### Présentation de l'invention

Le but de l'invention est de fournir un dispositif lumineux et un procédé d'utilisation d'un tel dispositif lumineux remédiant aux inconvénients ci-dessus et améliorant les dispositifs lumineux connus de l'art antérieur et leurs procédés d'utilisation.

Plus précisément, un premier objet de l'invention est un dispositif lumineux à la fois simple et permettant de projeter un pictogramme avec un rendu visuel optimal.

Un second objet de l'invention un procédé d'utilisation d'un dispositif lumineux permettant d'animer un pictogramme avec un rendu visuel optimal.

### Résumé de l'invention

L'invention se rapporte à un dispositif lumineux pour projeter une image sur le sol autour d'un véhicule automobile, le dispositif lumineux comprenant :
- une source de lumière,
- une diapositive pourvue d'au moins un motif, l'au moins un motif étant agencé de sorte à être éclairé par la source de lumière, et
- au moins un masque pourvu d'une zone opaque, le masque étant mobile entre une première position et une deuxième position relativement à la diapositive,

la zone opaque du masque s'étendant hors d'un faisceau lumineux issu de la diapositive lorsque le masque est dans sa première position pour projeter une première image sur le sol , et
la zone opaque du masque s'étendant au travers du faisceau lumineux issu de la diapositive lorsque le masque est dans sa deuxième position pour projeter une deuxième image sur le sol différente de la première image.

Le dispositif lumineux peut comprendre un premier moyen de butée définissant la première position du masque et/ou un deuxième moyen de butée définissant la deuxième position du masque.

Le dispositif lumineux peut comprendre un actionneur configuré pour déplacer le masque en translation entre sa première position et sa deuxième position.

Ledit actionneur peut comprendre un électroaimant, et le masque peut comprendre un élément en matériau ferromagnétique configuré pour interagir avec l'électroaimant. Ledit actionneur peut comprendre un moteur pourvu d'un pignon, le masque comprenant une denture coopérant avec ledit pignon.

L'au moins un motif de la diapositive peut comprendre au moins une zone opaque et au moins une zone transparente, la zone opaque du masque comprenant une forme sensiblement homothétique à la forme de l'au moins une zone transparente de la diapositive pour occulter l'au moins une zone transparente de la diapositive lorsque le masque est dans sa deuxième position.

L'au moins un motif de la diapositive peut comprendre une zone opaque, une première zone transparente et une deuxième zone transparente, la deuxième zone transparente étant séparée de la première zone transparente par la zone opaque de la diapositive, le masque comprenant une zone transparente s'étendant en vis-à-vis de la première zone transparente de la diapositive et la zone opaque du masque s'étendant en vis-à-vis de la deuxième zone transparente de la diapositive lorsque le masque est dans sa deuxième position.

Le dispositif lumineux peut comprendre :
- un premier masque pourvu d'une zone opaque, le premier masque étant mobile entre une première position et une deuxième position relativement à la diapositive, et
- au moins un deuxième masque pourvu d'une zone opaque, le deuxième masque étant mobile entre une première position et une deuxième position relativement à la diapositive, la zone opaque du premier masque et du deuxième masque s'étendant hors d'un faisceau lumineux issu de la diapositive lorsque le premier masque et le deuxième masque sont dans leur première position pour projeter une première image sur le sol ,
la zone opaque du premier masque s'étendant au travers du faisceau lumineux issu de la diapositive lorsque le premier masque est dans sa deuxième position et le deuxième masque est dans sa première position pour projeter une deuxième image sur le sol différente de la première image, et la zone opaque du deuxième masque s'étendant au travers du faisceau lumineux issu de la diapositive lorsque le deuxième masque est dans sa deuxième position pour projeter une troisième image sur le sol différente de la première image et de la deuxième image.

La diapositive peut comprendre un premier motif et au moins un deuxième motif, et la diapositive peut être mobile entre une première position et une deuxième position, le premier motif étant agencé de sorte à être éclairé par la source de lumière lorsque la diapositive est dans sa première position, le deuxième motif étant agencé de sorte à être éclairé par la source de lumière lorsque la diapositive est dans sa deuxième position, le dispositif lumineux étant apte à projeter une première image sur le sol lorsque la diapositive est dans sa première position, et le dispositif lumineux étant apte à projeter une quatrième image sur le sol lorsque la diapositive est dans sa deuxième position.

La diapositive peut comprendre une forme globalement circulaire, et le dispositif lumineux peut comprendre un actionneur configuré pour faire pivoter la diapositive entre sa première position et sa deuxième position autour d'un centre de la diapositive.

L'invention se rapporte également à un procédé de fonctionnement d'un dispositif lumineux tel que défini précédemment, le procédé de fonctionnement comprenant un déplacement de l'au moins un masque de sa première position à sa deuxième position puis un déplacement de l'au moins un masque de sa deuxième position à sa première position pour produire un effet clignotant de l'image projetée au sol.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile équipé d'un dispositif lumineux selon un mode de réalisation de l'invention.
La figure 2 est une vue schématique d'une diapositive du dispositif lumineux.
La figure 3 est une vue schématique d'un premier masque du dispositif lumineux.
La figure 4 est une vue schématique d'un deuxième masque du dispositif lumineux.
La figure 5 est une vue schématique de dessus du véhicule et d'une première image projetée par le dispositif lumineux à côté du véhicule.
La figure 6 est une vue schématique de dessus du véhicule et d'une deuxième image projetée par le dispositif lumineux à côté du véhicule.
La figure 7 est une vue schématique de dessus du véhicule et d'une troisième image projetée par le dispositif lumineux à côté du véhicule.

### Description détaillée

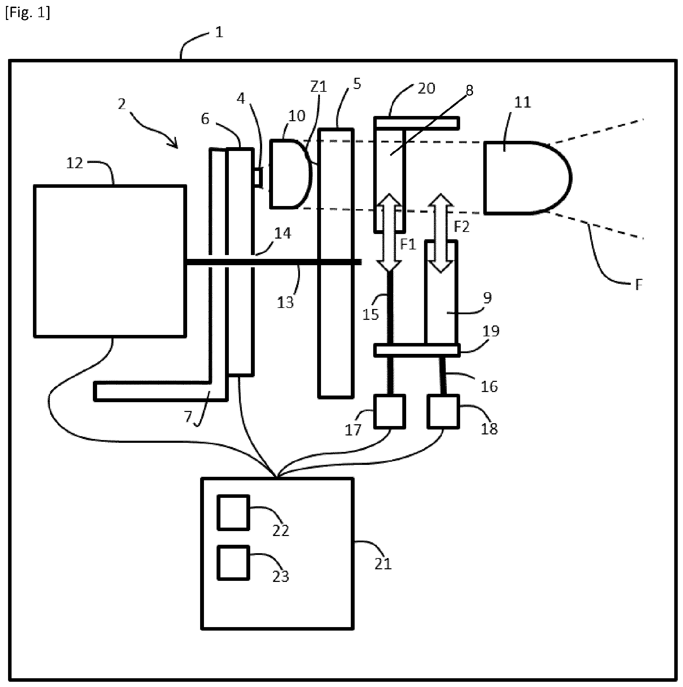

La figure 1 illustre schématiquement un véhicule 1 automobile selon un mode de réalisation de l'invention. Le véhicule 1 peut être par exemple un véhicule particulier, un véhicule utilitaire, un camion ou même un bus. Le véhicule 1 comprend un dispositif lumineux 2 selon un mode de réalisation de l'invention. Le dispositif lumineux 2 est configuré pour projeter une image sur le sol autour du véhicule 1. L'image peut être par exemple projetée à quelques dizaines de centimètres sur le sol le long d'un côté du véhicule. Le dispositif lumineux 2 peut être, par exemple, fixé au véhicule au niveau d'un rétroviseur extérieur du véhicule ou encore au niveau d'un seuil de porte du véhicule.

Le dispositif lumineux 2 comprend au moins une source de lumière 4 apte à produire un faisceau lumineux F et une diapositive 5 positionnée sur la trajectoire du faisceau lumineux F. La diapositive 5 comprend au moins un motif configuré pour modifier le faisceau lumineux issu de la source de lumière 4 de manière à projeter une image sur le sol. En particulier, la diapositive 5 est configurée pour intercepter ou filtrer certains rayons lumineux issus de la source de lumière 4 de manière à produire une image. En remarque, le dispositif lumineux 2 ne vise pas à produire un éclairage nocturne de l'environnement du véhicule, ou à rendre le véhicule bien visible des autres usagers de la route. Ainsi, le dispositif lumineux 2 se distingue des projecteurs équipant habituellement les véhicules et qui embarquent des feux de route et/ou des feux de croisement. L'image projetée sur le sol peut comprendre une information sur l'état du véhicule et/ou sur l'environnement du véhicule. Avantageusement, l'image projetée au sol se présente sous la forme d'un ou plusieurs pictogrammes.

La source de lumière 4 peut être par exemple une diode électroluminescente ou un ensemble de diodes électroluminescentes. En variante, elle pourrait prendre toute autre forme, comme par exemple une lampe à incandescence. Avantageusement, la source de lumière peut avoir une puissance suffisante pour projeter une image sur le sol qui soit visible même en plein jour. De préférence, la source de lumière 4 peut projeter des rayons lumineux de couleur blanche. La source de lumière 4 peut être connectée à une carte de circuit imprimé 6. La carte de circuit imprimé peut être maintenue par un support 7 comprenant éventuellement un dissipateur thermique.

Le dispositif lumineux 2 comprend également deux masques 8, 9 comprenant chacun au moins une zone opaque. Chaque masque 8, 9 est mobile indépendamment de l'autre entre une première position et une deuxième position. La zone opaque de chaque masque s'étend hors d'un faisceau lumineux F issu de la diapositive lorsque le masque est dans sa première position, et la zone opaque de chaque masque s'étend au travers du faisceau lumineux F issu de la diapositive lorsque le masque est dans sa deuxième position. La première position de chaque masque est donc une position escamotée et la deuxième position est une position de masquage. Un premier masque 8 est positionné directement en aval de la diapositive 5 suivant le sens de propagation des rayons lumineux, au moins lorsqu'il est dans sa deuxième position. Un deuxième masque 9 est positionné directement en aval du premier masque 8 suivant le sens de propagation des rayons lumineux, au moins lorsqu'il est dans sa deuxième position. Sur la figure 1, on a représenté le premier masque 8 dans sa deuxième position et le deuxième masque 9 dans sa première position. Des flèches F1 et F2 représentent respectivement le déplacement des masques 8 et 9 entre leur première et leur deuxième position. En variante, le dispositif lumineux pourrait comprendre un seul masque ou trois masques ou même encore davantage de masques positionnés en aval les uns des autres suivant le sens de propagation des rayons lumineux, au moins lorsqu'ils sont dans leur deuxième position.

Le dispositif lumineux 2 comprend également un guide optique 10 agencé entre la source de lumière 4 et une portion de la diapositive 5. Le guide optique 10, ou guide de lumière, est configuré pour guider les rayons lumineux issus de la source de lumière 4 vers une portion de la diapositive 5. Ainsi, selon le mode de réalisation présenté, le dispositif lumineux 2 comprend une zone d'éclairage Z1 de la diapositive 5, et seule la partie de la diapositive 5 positionnée dans la zone d'éclairage Z1 contribue à la projection d'une image sur le sol. Un élément optique 11, tel qu'une lentille de projection peut être prévue en aval des masques 8, 9, c'est-à-dire de l'autre côté de la diapositive 5 et des masques 8, 9 par rapport à la source de lumière 4, afin de mettre en forme et orienter le faisceau lumineux vers le sol.

Selon un mode de réalisation simplifié, la diapositive 5 pourrait être fixe en position au sein du dispositif lumineux 2. Selon un mode de réalisation préféré, la diapositive 5 comprend au moins deux motifs, et elle est mobile entre une première position et au moins une deuxième position, distincte de la première position. Lorsque la diapositive est dans sa première position, un premier motif est positionné dans la zone d'éclairage Z1. Lorsque la diapositive est dans sa deuxième position, un deuxième motif est positionné dans la zone d'éclairage Z1. Pour déplacer la diapositive 5 entre sa première position et sa deuxième position, le dispositif lumineux 2 comprend un premier actionneur 12 en liaison mécanique avec la diapositive 5. Avantageusement, le plan dans lequel s'étend la diapositive 5 dans sa première position peut être identique au plan dans lequel elle s'étend dans sa deuxième position. En particulier, la diapositive 5 peut être avantageusement mobile en rotation autour d'un axe perpendiculaire au plan dans lequel elle s'étend. En variante ou en combinaison, la diapositive 5 pourrait également être mobile en translation dans le plan dans lequel elle s'étend.

Selon un mode de réalisation préféré, le premier actionneur 12 est un moteur électrique. Le moteur électrique est positionné derrière la carte de circuit imprimé 6 et derrière le support 7. Il comprend un arbre tournant 13 passant au travers d'une ouverture 14 prévue dans la carte de circuit imprimé 6 et dans le support 7. La diapositive 5 comprend une forme circulaire et est fixée en son centre O à l'arbre tournant 13. Les différents motifs que comporte la diapositive 5 sont répartis dans des secteurs angulaires distincts de la diapositive.

Selon une variante de réalisation, la liaison entre le premier actionneur 12 et la diapositive 5 pourrait être agencée différemment. Par exemple, la diapositive 5 pourrait être montée rotative ou coulissante sur un support distinct du premier actionneur 12. Le premier actionneur pourrait être relié mécaniquement à un bord de la diapositive 5. Un déplacement en translation et/ou en rotation de la diapositive 5 pourrait être obtenu grâce à la coopération d'une roue dentée solidaire du premier actionneur et d'une crémaillère solidaire de la diapositive 5.

De préférence, chaque masque 8, 9 est mobile en translation entre sa première position et sa deuxième position. A cet effet, les masques 8, 9 peuvent être chacun montés en liaison glissière sur un axe 15, 16. En particulier, les masques peuvent être mobiles en translation selon un axe perpendiculaire à l'arbre tournant 13. En variante, d'autres types de mouvement pour déplacer les masques entre leur première position et leur deuxième position pourraient être envisagés, comme par exemple un mouvement de rotation ou une combinaison d'une rotation et d'une translation. Dans tous les cas, le plan dans lequel s'étend chaque masque dans sa première position peut être identique au plan dans lequel il s'étend dans sa deuxième position.

Pour déplacer chacun des masques 8 et 9 entre leur première position et leur deuxième position, le dispositif lumineux 2 comprend également autant d'actionneurs 17, 18 que de masques, chaque actionneur étant en liaison mécanique avec un masque. Selon un mode de réalisation un actionneur 17, 18 comprend un électroaimant, et le masque 8, 9 correspondant comprend un élément en matériau ferromagnétique configuré pour interagir avec l'électroaimant. Lorsque l'électroaimant est activé par le passage d'un courant électrique, il exerce un effort qui tend à déplacer le masque 8, 9 concerné le long de son axe 15, 16 vers sa deuxième position ou vers sa première position. Un tel mode de réalisation peut éventuellement être complété par un moyen de rappel tel qu'un ressort agissant dans le sens contraire de l'électroaimant. Selon une autre variante de réalisation de l'invention, un actionneur 17, 18 peut comprendre un moteur pourvu d'un pignon, et le masque peut comprendre une denture coopérant avec ledit pignon.

En remarque, on note que les actionneurs actionneur 12, 17 et 18 ne déplacent respectivement que la diapositive 5, le premier masque 8 et le deuxième masque 9. La diapositive et les masques étant très légers, ces actionneurs 12, 17, 18 peuvent être particulièrement simples et compacts.

Avantageusement, le dispositif lumineux comprend un premier moyen de butée 19 définissant la première position de chaque masque et/ou un deuxième moyen de butée 20 définissant la deuxième position de chaque masque. Autrement dit, chaque masque 8, 9 est en appui contre le premier moyen de butée 19 lorsqu'il est dans sa première position, et contre le deuxième moyen de butée 20 lorsqu'il est dans sa deuxième position. Ces moyens de butée 19, 20 peuvent être agencés à deux extrémités opposées des axes 15, 16. Ils peuvent être formés par des appuis mécaniques sur un bord de chaque masque 8 ,9. Ainsi, les actionneurs 17, 18 ne doivent pas nécessairement être conçus de sorte à déplacer les masques 8, 9 avec une grande précision. Au contraire, leur conception peut rester très simple. La première position et la deuxième position de chaque masque est néanmoins établie avec une grande précision.

La carte de circuit imprimé 6 et les trois actionneurs 12, 17 et 18 sont reliés électriquement à une unité de commande électronique 21 comprenant une mémoire 22 et un microprocesseur 23. La mémoire 22 de l'unité de commande électronique 21 est un support d'enregistrement de données sur lequel est enregistré un programme d'ordinateur comprenant des instructions de code de programme de mise en œuvre d'un procédé de contrôle automatique du dispositif lumineux 2. En particulier, l'unité de commande électronique 21 est configurée pour contrôler l'allumage ou l'extinction de la source de lumière 4 ainsi que l'activation des actionneurs 12, 17 et 18. L'unité de commande électronique 21 peut donc contrôler l'orientation de la diapositive 5 ainsi que la position de chaque masque 8, 9. Le microprocesseur 23 est apte à exécuter ce programme d'ordinateur.

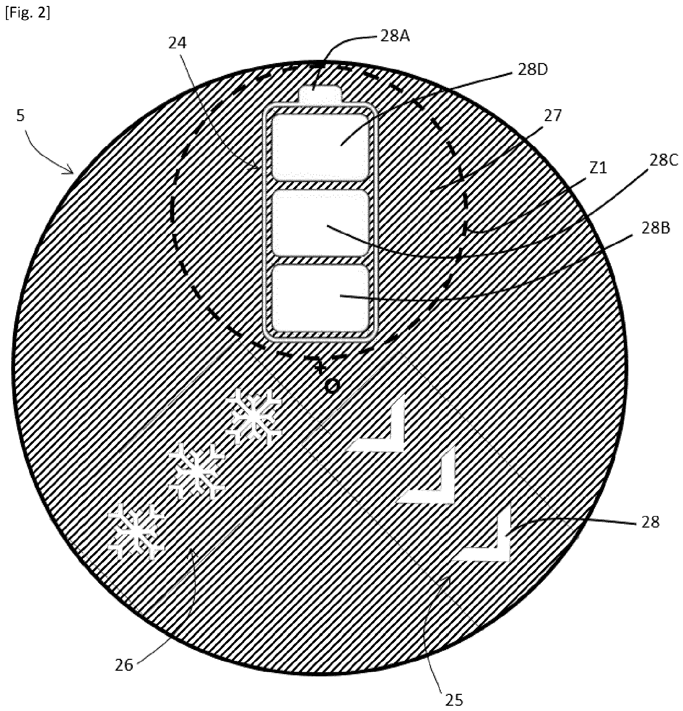

La figure 2 illustre un mode de réalisation de la diapositive 5. La diapositive 5 forme un écran s'étendant dans un plan sensiblement perpendiculairement au faisceau lumineux F. Elle comprend la forme d'un disque et est mobile en rotation autour d'un axe passant par le centre O du disque. Un tel mode de réalisation présente l'avantage que le volume occupé par la diapositive 5 ne varie pas en fonction de son orientation. Le dispositif lumineux 2 peut donc rester très compact. Le diamètre du disque peut être compris, par exemple, entre 1cm et 5cm inclus.

Selon le mode de réalisation présenté, la diapositive comprend trois motifs 24, 25, 26 dont l'éclairage par la source de lumière permet de projeter trois images distinctes sur le sol. Les motifs 24, 25, 26 sont répartis autour du centre 0. Les motifs sont répartis de sorte qu'un seul motif à la fois puisse se trouver dans la zone d'éclairage Z1. On note que la zone d'éclairage Z1 présente une forme circulaire. En variante, la zone d'éclairage pourrait comprendre toute autre forme, comme par exemple une forme globalement polygonale, notamment une forme globalement trapézoïdale ou pseudo-trapézoïdale, le guide optique 10 étant alors adapté en conséquence. En variante, la diapositive pourrait comprendre un unique motif, seulement deux motifs, ou encore tout nombre de motifs supérieur ou égale à quatre.

Selon un mode de réalisation, les motifs 24, 25, 26 comprennent chacun des zones opaques 27 et des zones transparentes 28. Les zones opaques 27 (représentées en surface hachurée sur la figure 2) sont des zones bloquant ou réfléchissant les rayons lumineux issus de la source de lumière 4. Elles peuvent être, par exemple, de couleur noire ou chromée. Les zones transparentes 28 sont des zones laissant passer les rayons lumineux issus de la source de lumière 4. Les zones opaques 27 et les zones transparentes 28 sont des zones complémentaires de la surface de la diapositive 5. Par exemple, la diapositive 5 peut comprendre un support transparent, par exemple en verre, recouvert localement par un substrat occultant déposé par lithographie. La lithographie permet avantageusement d'obtenir une grande précision géométrique des zones transparentes et des zones opaques. En variante, d'autres procédés pourraient être envisagés comme par exemple la découpe d'ouvertures dans un support en matière opaque, notamment par découpe laser. Selon une variante de réalisation, les motifs 24, 25, 26 pourraient comprendre des zones translucides de manière à produire une image projetée au sol comprenant des portions d'intensité lumineuse variable. La diapositive pourrait aussi comprendre des filtres colorés de manière à produire une image en couleur.

Les zones transparentes 28 présentent des formes, notamment des contours, convenant à la projection sur le sol d'images représentant un pictogramme. Les contours de chaque zone transparente 28 sont donc liés aux contours du pictogramme. En pratique, la forme des zones transparentes 28 peut être adaptée pour tenir compte des déformations géométriques liées à la projection du faisceau lumineux sur le sol, notamment pour tenir compte de l'angle d'incidence des rayons lumineux sur le sol. Un premier motif 24 peut comprendre la forme d'une pile comprenant trois étages, chaque étage représentant un niveau de chargement de la pile. En particulier, le premier motif 24 comprend quatre zones transparentes 28A, 28B, 28C et 28D distinctes. Les quatre zones transparentes 28A, 28B, 28C et 28D sont séparées les unes des autres par des zones opaques 27. En l'espèce, la zone transparente 28A représente un contour de la forme de pile et les zones transparentes 28B, 28C et 28D représentent chacune un étage de la pile. Un deuxième motif peut comprendre des symboles en forme d'une flèche et un troisième motif peut comprendre des symboles en forme d'un flocon. En variante, tout autre forme géométrique, symbole, ou pictogramme pourrait être envisagé. La plus grande dimension d'une zone transparente 28 peut être par exemple comprise entre 1mm et 10mm inclus. Le pictogramme projeté au sol a de préférence une forme géométrique simple. L'image projetée par le dispositif lumineux est non pixélisée.

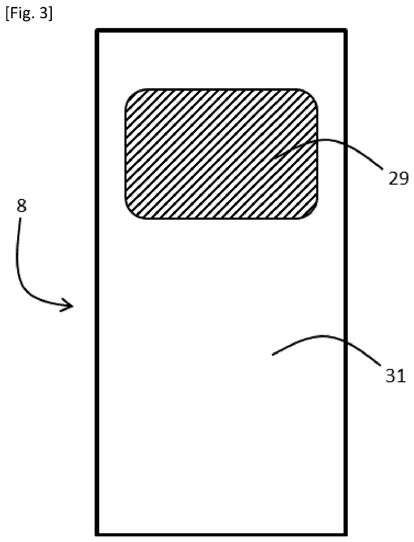

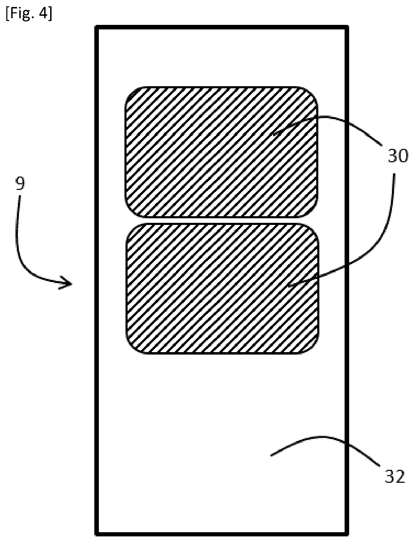

Les figures 3 et 4 illustrent respectivement le premier masque 8 et le deuxième masque 9. Chaque masque 8, 9 comprend au moins une zone opaque 29, 30. La zone opaque 29, 30 de chaque masque est destinée à être positionnée en vis-à-vis d'une zone transparente de la diapositive de manière à modifier l'image projetée au sol. En complément chaque masque peut aussi comprendre une ou plusieurs zones transparentes 31, 32. Ces zones transparentes 31, 32 permettent notamment de supporter de manière invisible les zones opaques 29, 30. Les zones transparentes 31, 32 peuvent donc s'étendre entre les zones opaques 29,30 et une interface coopérant avec les actionneurs 17, 18. Les zones opaques 29, 30 et les zones transparentes 31, 32 peuvent être des zones complémentaires de la surface de chaque masque 8, 9. Par exemple, chaque masque 8, 9 peut comprendre un support transparent, par exemple en verre, recouvert localement par un substrat occultant déposé par lithographie. En variante, les masques 8, 9 pourraient être obtenus par découpe d'ouvertures dans un support en matière opaque, notamment par découpe laser.

Avantageusement, au moins une zone opaque 29, 30 d'un masque 8, 9 peut comprendre une forme sensiblement homothétique à la forme d'au moins une zone transparente 28A, 28B, 28C, 28D de la diapositive 5. Ceci permet d'occulter sélectivement la zone transparente 28A, 28B, 28C, 28D concernée sans occulter d'autres zones transparentes lorsque le masque est dans sa deuxième position. On parvient ainsi à supprimer un élément formant le pictogramme projeté sur le sol sans modifier ou altérer l'apparence des autres éléments du pictogramme. Par exemple, dans le cas d'espèce, les zones transparentes 28C et 28D comprennent des formes sensiblement rectangulaires. Ces formes rectangulaires sont reproduites par les zones opaques 29 des masques 8 et 9. En remarque, dans l'hypothèse où le faisceau lumineux issu de la diapositive est divergeant ou convergeant, on peut prévoir des formes des zones opaques 29, 30 non pas identiques mais plus généralement homothétiques. Comme nous le verrons par la suite, les zones opaques 29, 30 peuvent également être prévues avec de plus grandes dimensions que les zones transparentes 28A, 28B, 28C, 28D qu'elles sont destinées à recouvrir, de manière à supporter des décalages de positionnement entre la diapositive et le masque.

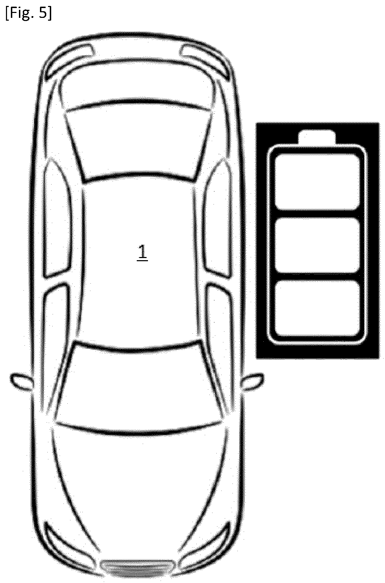

La figure 5 représente le véhicule 1 et l'image projetée au sol à côté du véhicule par le dispositif lumineux 2 lorsque le motif 24 est positionné dans la zone d'éclairage Z1 et lorsque les deux masques 8 et 9 sont dans leur première position. La source de lumière 4 émet un faisceau lumineux qui est guidé par le guide optique 10 et illumine la diapositive 5 au niveau de la zone d'éclairage Z1. Les rayons lumineux incidents au niveaux des zones opaques 27 de la diapositive sont réfléchis ou absorbés et ne sont pas projetés sur le sol. Les rayons lumineux incidents au niveau des zones transparentes 28A, 28, 28C, 28D de la diapositive traversent la diapositive et parviennent jusqu'à l'élément optique 11 sans être bloqué par un masque. Les rayons lumineux sont ensuite guidés vers le sol par l'élément optique 11. L'image obtenue représente le pictogramme d'une pile dont les trois étages sont pleins, ce qui signifie que la batterie du véhicule est complètement rechargée.

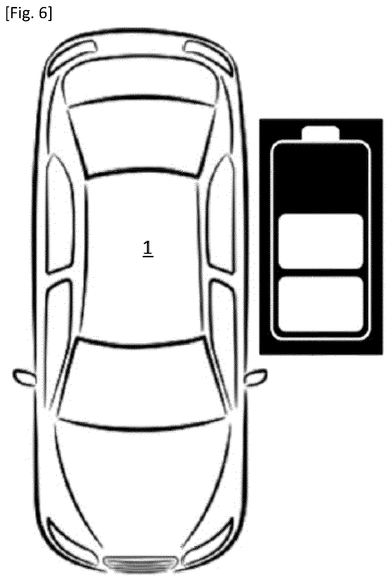

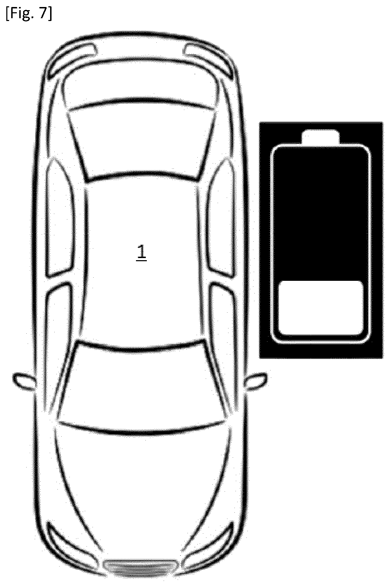

La figure 6 représente l'image projetée au sol à côté du véhicule par le dispositif lumineux 2 lorsque le premier masque 8 est dans sa deuxième position et le deuxième masque est dans sa première position. La zone opaque 29 du premier masque recouvre alors la zone transparente 28D du premier motif 24, ce qui conduit à l'affichage d'un pictogramme d'une pile comprenant seulement deux étages éclairés. Un tel pictogramme peut signifier que la batterie du véhicule est rechargée au deux tiers. La figure 7 représente l'image projetée au sol à côté du véhicule par le dispositif lumineux 2 lorsque le deuxième masque est dans sa deuxième position. La zone opaque 30 du deuxième masque recouvre alors les zones transparentes 28C et 28D du premier motif 24, ce qui conduit à l'affichage d'un pictogramme d'une pile comprenant seulement un étage éclairé, ce qui signifie que la batterie du véhicule est rechargée à un tiers.

Comme les différentes zones transparentes 28A, 28B, 28C, 28D sont séparées les unes des autres par des zones opaques 27, le dispositif lumineux tolère une certaine imprécision de positionnement entre la diapositive 5 et les masques 8 ou 9. En effet, les zones opaques 29, 30 de chaque masque peuvent être légèrement décalées par rapport aux zones transparentes 28C, 28D qu'elles recouvrent pourvu qu'elles soient à la fois assez grandes pour couvrir les zones transparentes 28C , 28D malgré le décalage, et pourvu qu'elles ne soient pas trop grandes pour ne pas dépasser sur une autre zone transparente 28A, 28B de la diapositive. Ainsi, plus les zones opaques 27 séparant les différentes zones transparentes 28A, 28B, 28C et 28D du masque sont larges, et plus le dispositif lumineux pourra tolérer des décalages de positionnement important entre la diapositive et les masques sans altérer la qualité de l'image projetée au sol.

Avantageusement, les zones opaques 29, 30 du premier masque et du deuxième masque ne recouvrent pas la zone transparente 28A si bien que le contour de la pile reste toujours bien visible, quelle que soit la position des masques. En remarque, dans le cas d'espèce le deuxième masque comprend deux zones opaques correspondant aux deux zones transparentes 28C et 28D du premier motif. En variante, le deuxième masque pourrait ne comprendre qu'une seule zone opaque correspondant uniquement à la zone transparente 28C. Dans cette hypothèse, il faudrait que les deux masques 8 et 9 soient dans leur deuxième position pour produire le pictogramme illustré sur la figure 7. Bien sûr, on pourrait envisager un plus grand nombre de masques de manière à recouvrir d'autres zones transparentes de la diapositive. Par exemple, le dispositif lumineux pourrait comprendre un troisième masque comprenant une zone opaque positionnée de sorte à masquer la zone transparente 28B et ainsi produire le pictogramme d'une pile sans aucun étage illuminé. Pour chaque masque ajouté le nombre d'images différentes que peut produire le dispositif lumineux peut être multiplié par deux. Selon un autre mode de réalisation, un même masque pourrait être mobile entre plus que deux positions (par exemple entre trois positions ou entre quatre positions) et comprendre autant de zones opaques différentes que de position différentes. Pour chaque position dudit masque des zones transparentes différentes de la diapositive seraient masquées.

Grace à l'invention, on parvient donc à obtenir des images différentes projetées au sol sans avoir à faire pivoter la diapositive 5. On peut ainsi proposer un dispositif lumineux dont la diapositive comprend moins de motifs à sa surface tout en conservant un nombre important d'images différentes. Comme la diapositive comprend moins de motifs, chaque motif peut être plus grand sur la diapositive, ce qui améliore la résolution de l'image projetée. En outre, les différentes images obtenues sont projetées au sol sensiblement au même endroit. Ceci permet de projeter une succession d'images sans observer de décalage entre les différentes images projetées.

L'unité de commande électronique 21 peut commander la position d'un ou plusieurs masques de manière à produire des mouvements de va-et-vient du masque entre sa première position et sa deuxième position. On obtient ainsi un effet clignotant de l'image projetée. La source de lumière peut éventuellement être éteinte au cours du déplacement du masque de manière à masquer la transition entre les images projetées. Au contraire, la source de lumière pourrait aussi être maintenue allumée au cours du déplacement du masque de manière fournir une animation supplémentaire de l'image, une portion de l'image étant progressivement masquée ou découverte au cours du déplacement du masque. Comme la diapositive est immobile pendant que les masques effectuent des mouvements de va-et-vient, les portions de l'image correspondant aux zones transparentes 28A ou 28B non masquées demeurent parfaitement immobiles relativement au véhicule. La qualité de l'animation est ainsi optimale. L'état clignotant de l'image projetée au sol peut indiquer que la charge de la batterie du véhicule est en cours.

Pour changer les images projetées au sol, on peut également faire pivoter la diapositive de 120° autour de son centre O. Selon le mode de réalisation illustré, on peut ainsi obtenir la projection de pictogrammes représentant des flocons, des flèches ou tout autre symbole. Avantageusement, les masques 8 et 9 peuvent aussi être utilisés pour masquer localement les motifs 25 et 26. On peut ainsi obtenir la projection d'un seul, de deux, ou encore de trois symboles de flocon sur le sol. On peut également obtenir la projection d'un seul, de deux ou de trois symboles de flèches sur le sol. De la même manière, on peut également animer, notamment rendre clignotant, l'affichage de tout ou partie de ces pictogrammes.

## Revendications

1. Dispositif lumineux (2) pour véhicule (1) automobile, pour projeter une image sur le sol autour dudit véhicule (1) automobile, le dispositif lumineux comprenant :
- une source de lumière (4),
- une diapositive (5) pourvue d'au moins un motif (24, 25, 26), l'au moins un motif étant agencé de sorte à être éclairé par la source de lumière, et
- au moins un masque (8, 9) pourvu d'une zone opaque (29, 30),
le dispositif lumineux étant **caractérisé en ce que** le masque est mobile entre une première position et une deuxième position relativement à la diapositive,
la zone opaque du masque s'étend hors d'un faisceau lumineux (F) issu de la diapositive lorsque le masque est dans sa première position pour projeter une première image sur le sol, et
la zone opaque du masque s'étend au travers du faisceau lumineux issu de la diapositive lorsque le masque est dans sa deuxième position pour projeter une deuxième image sur le sol différente de la première image.

2. Dispositif lumineux (2) selon la revendication précédente, **caractérisé en ce qu'**il comprend un premier moyen de butée (19) définissant la première position du masque et/ou un deuxième moyen de butée (20) définissant la deuxième position du masque.

3. Dispositif lumineux (2) selon l'une des revendications précédentes, **caractérisé en ce qu'**il comprend un actionneur (17, 18) configuré pour déplacer le masque (8, 9) en translation entre sa première position et sa deuxième position.

4. Dispositif lumineux (2) selon la revendication précédente, **caractérisé en ce que** :
- ledit actionneur (17, 18) comprend un électroaimant, et le masque comprend un élément en matériau ferromagnétique configuré pour interagir avec l'électroaimant, ou **en ce que**
- ledit actionneur (17, 18) comprend un moteur pourvu d'un pignon, le masque comprenant une denture coopérant avec ledit pignon.

5. Dispositif lumineux (2) selon l'une des revendications précédentes, **caractérisé en ce que** l'au moins un motif (24, 25, 26) de la diapositive (5) comprend au moins une zone opaque (27) et au moins une zone transparente (28, 28A, 28B, 28C, 28D), la zone opaque (29, 30) du masque (8, 9) comprenant une forme sensiblement homothétique à la forme de l'au moins une zone transparente de la diapositive pour occulter l'au moins une zone transparente de la diapositive lorsque le masque est dans sa deuxième position.

6. Dispositif lumineux (2) selon l'une des revendications précédentes, **caractérisé en ce que** l'au moins un motif (24, 25, 26) de la diapositive (5) comprend une zone opaque (27), une première zone transparente (28A, 28B, 28C) et une deuxième zone transparente (28D), la deuxième zone transparente étant séparée de la première zone transparente par la zone opaque de la diapositive, le masque (8) comprenant une zone transparente (31) s'étendant en vis-à-vis de la première zone transparente de la diapositive et la zone opaque du masque (29) s'étendant en vis-à-vis de la deuxième zone transparente de la diapositive lorsque le masque est dans sa deuxième position.

7. Dispositif lumineux (2) selon l'une des revendications précédentes, **caractérisé en ce qu'**il comprend :
- un premier masque (8) pourvu d'une zone opaque (29), le premier masque étant mobile entre une première position et une deuxième position relativement à la diapositive (5), et
- au moins un deuxième masque (9) pourvu d'une zone opaque (30), le deuxième masque étant mobile entre une première position et une deuxième position relativement à la diapositive (5),
la zone opaque (29, 30) du premier masque et du deuxième masque s'étendant hors d'un faisceau lumineux (F) issu de la diapositive lorsque le premier masque et le deuxième masque sont dans leur première position pour projeter une première image sur le sol ,
la zone opaque (29) du premier masque (8) s'étendant au travers du faisceau lumineux issu de la diapositive lorsque le premier masque est dans sa deuxième position et le deuxième masque est dans sa première position pour projeter une deuxième image sur le sol différente de la première image, et
la zone opaque (30) du deuxième masque (9) s'étendant au travers du faisceau lumineux issu de la diapositive lorsque le deuxième masque est dans sa deuxième position pour projeter une troisième image sur le sol différente de la première image et de la deuxième image.

8. Dispositif lumineux (2) selon l'une des revendications précédentes, **caractérisé en ce que** la diapositive (5) comprend un premier motif (24) et au moins un deuxième motif (25, 26), et **en ce que** la diapositive (5) est mobile entre une première position et une deuxième position, le premier motif étant agencé de sorte à être éclairé par la source de lumière lorsque la diapositive est dans sa première position, le deuxième motif étant agencé de sorte à être éclairé par la source de lumière lorsque la diapositive est dans sa deuxième position, le dispositif lumineux étant apte à projeter une première image sur le sol lorsque la diapositive est dans sa première position, et le dispositif lumineux étant apte à projeter une quatrième image sur le sol lorsque la diapositive est dans sa deuxième position.

9. Dispositif lumineux (2) selon la revendication précédente, **caractérisé en ce que** la diapositive (5) comprend une forme globalement circulaire, et **en ce que** le dispositif lumineux comprend un actionneur configuré pour faire pivoter la diapositive entre sa première position et sa deuxième position autour d'un centre (O) de la diapositive.

10. Procédé de fonctionnement d'un dispositif lumineux (2) selon l'une des revendications précédentes, **caractérisé en ce qu'**il comprend un déplacement de l'au moins un masque (8, 9) de sa première position à sa deuxième position puis un déplacement de l'au moins un masque de sa deuxième position à sa première position pour produire un effet clignotant de l'image projetée au sol.

## Patentansprüche

1. Leuchtvorrichtung (2) für ein Kraftfahrzeug (1), zum Projizieren eines Bildes auf den Boden um das Kraftfahrzeug (1) herum, wobei die Leuchtvorrichtung umfasst:
- eine Lichtquelle (4),
- eine Folie (5), die mit mindestens einem Muster (24, 25, 26) versehen ist, wobei das mindestens eine Muster so angeordnet ist, dass es von der Lichtquelle beleuchtet wird, und
- mindestens eine Maske (8, 9), die mit einem undurchsichtigen Bereich (29, 30) versehen ist,
wobei die Leuchtvorrichtung **dadurch gekennzeichnet ist, dass** die Maske relativ zur Folie zwischen einer ersten Position und einer zweiten Position beweglich ist, wobei sich der undurchsichtige Bereich der Maske außerhalb eines von der Folie ausgehenden Lichtstrahls (F) erstreckt, wenn sich die Maske in ihrer ersten Position befindet, um ein erstes Bild auf den Boden zu projizieren, und wobei sich der undurchsichtige Bereich der Maske durch den von der Folie ausgehenden Lichtstrahl erstreckt, wenn sich die Maske in ihrer zweiten Position befindet, um ein zweites Bild auf den Boden zu projizieren, das sich vom ersten Bild unterscheidet.

2. Leuchtvorrichtung (2) nach dem vorhergehenden Anspruch, **dadurch gekennzeichnet, dass** sie ein erstes Anschlagmittel (19), das die erste Position der Maske definiert, und/oder ein zweites Anschlagmittel (20) umfasst, das die zweite Position der Maske definiert.

3. Leuchtvorrichtung (2) nach einem der vorhergehenden Ansprüche, **dadurch gekennzeichnet, dass** sie einen Aktuator (17, 18) umfasst, der konfiguriert ist, um die Maske (8, 9) translatorisch zwischen ihrer ersten Position und ihrer zweiten Position zu bewegen.

4. Leuchtvorrichtung (2) nach dem vorhergehenden Anspruch, **dadurch gekennzeichnet, dass**: - der Aktuator (17, 18) einen Elektromagneten umfasst und die Maske ein Element aus ferromagnetischem Material umfasst, das konfiguriert ist, um mit dem Elektromagneten zu interagieren, oder dass - der Aktuator (17, 18) einen Motor mit einem Ritzel umfasst, wobei die Maske eine Verzahnung umfasst, die mit dem Ritzel zusammenwirkt.

5. Leuchtvorrichtung (2) nach einem der vorhergehenden Ansprüche, **dadurch gekennzeichnet, dass** das mindestens eine Muster (24, 25, 26) der Folie (5) mindestens einen undurchsichtigen Bereich (27) und mindestens einen transparenten Bereich (28, 28A, 28B, 28C, 28D) umfasst, wobei der undurchsichtige Bereich (29, 30) der Maske (8, 9) eine Form umfasst, die im Wesentlichen homothetisch zur Form des mindestens einen transparenten Bereichs der Folie ist, um den mindestens einen transparenten Bereich der Folie zu verdecken, wenn sich die Maske in ihrer zweiten Position befindet.

6. Leuchtvorrichtung (2) nach einem der vorhergehenden Ansprüche, **dadurch gekennzeichnet, dass** das mindestens eine Muster (24, 25, 26) der Folie (5) einen undurchsichtigen Bereich (27), einen ersten transparenten Bereich (28A, 28B, 28C) und einen zweiten transparenten Bereich (28D) umfasst, wobei der zweite transparente Bereich durch den undurchsichtigen Bereich der Folie vom ersten transparenten Bereich getrennt ist, wobei die Maske (8) einen transparenten Bereich (31) umfasst, der sich gegenüber dem ersten transparenten Bereich der Folie erstreckt, und der undurchsichtige Bereich der Maske (29) sich gegenüber dem zweiten transparenten Bereich der Folie erstreckt, wenn sich die Maske in ihrer zweiten Position befindet.

7. Leuchtvorrichtung (2) nach einem der vorhergehenden Ansprüche, **dadurch gekennzeichnet, dass** sie umfasst: - eine erste Maske (8), die mit einem undurchsichtigen Bereich (29) versehen ist, wobei die erste Maske relativ zur Folie (5) zwischen einer ersten Position und einer zweiten Position beweglich ist, und - mindestens eine zweite Maske (9), die mit einem undurchsichtigen Bereich (30) versehen ist, wobei die zweite Maske relativ zur Folie (5) zwischen einer ersten Position und einer zweiten Position beweglich ist, wobei sich der undurchsichtige Bereich (29, 30) der ersten Maske und der zweiten Maske außerhalb eines von der Folie ausgehenden Lichtstrahls (F) erstreckt, wenn sich die erste Maske und die zweite Maske in ihrer ersten Position befinden, um ein erstes Bild auf den Boden zu projizieren, wobei sich der undurchsichtige Bereich (29) der ersten Maske (8) durch den von der Folie ausgehenden Lichtstrahl erstreckt, wenn sich die erste Maske in ihrer zweiten Position und die zweite Maske in ihrer ersten Position befindet, um ein zweites Bild auf den Boden zu projizieren, das sich vom ersten Bild unterscheidet, und wobei sich der undurchsichtige Bereich (30) der zweiten Maske (9) durch den von der Folie ausgehenden Lichtstrahl erstreckt, wenn sich die zweite Maske in ihrer zweiten Position befindet, um ein drittes Bild auf den Boden zu projizieren, das sich vom ersten Bild und vom zweiten Bild unterscheidet.

8. Leuchtvorrichtung (2) nach einem der vorhergehenden Ansprüche, **dadurch gekennzeichnet, dass** die Folie (5) ein erstes Muster (24) und mindestens ein zweites Muster (25, 26) umfasst, und dass die Folie (5) zwischen einer ersten Position und einer zweiten Position beweglich ist, wobei das erste Muster so angeordnet ist, dass es von der Lichtquelle beleuchtet wird, wenn sich die Folie in ihrer ersten Position befindet, wobei das zweite Muster so angeordnet ist, dass es von der Lichtquelle beleuchtet wird, wenn sich die Folie in ihrer zweiten Position befindet, wobei die Leuchtvorrichtung geeignet ist, ein erstes Bild auf den Boden zu projizieren, wenn sich die Folie in ihrer ersten Position befindet, und wobei die Leuchtvorrichtung geeignet ist, ein viertes Bild auf den Boden zu projizieren, wenn sich die Folie in ihrer zweiten Position befindet.

9. Leuchtvorrichtung (2) nach dem vorhergehenden Anspruch, **dadurch gekennzeichnet, dass** die Folie (5) eine im Wesentlichen kreisförmige Form aufweist, und dass die Leuchtvorrichtung einen Aktuator umfasst, der konfiguriert ist, um die Folie zwischen ihrer ersten Position und ihrer zweiten Position um einen Mittelpunkt (O) der Folie zu schwenken.

10. Betriebsverfahren einer Leuchtvorrichtung (2) nach einem der vorhergehenden Ansprüche, **dadurch gekennzeichnet, dass** es eine Bewegung der mindestens einen Maske (8, 9) von ihrer ersten Position in ihre zweite Position und anschließend eine Bewegung der mindestens einen Maske von ihrer zweiten Position in ihre erste Position umfasst, um einen Blinkeffekt des auf den Boden projizierten Bildes zu erzeugen.

## Claims

1. Luminous device (2) for a motor vehicle (1), for projecting an image onto the ground around said motor vehicle (1), the luminous device comprising:
- a light source (4),
- a slide (5) provided with at least one pattern (24, 25, 26), the at least one pattern being arranged so as to be illuminated by the light source, and
- at least one mask (8, 9) provided with an opaque zone (29, 30),
the luminous device being **characterized in that** the mask is movable between a first position and a second position relative to the slide, the opaque zone of the mask extends outside a light beam (F) coming from the slide when the mask is in its first position to project a first image onto the ground, and the opaque zone of the mask extends through the light beam coming from the slide when the mask is in its second position to project a second image onto the ground that is different from the first image.

2. Luminous device (2) according to the preceding claim, **characterized in that** it comprises a first stop means (19) defining the first position of the mask and/or a second stop means (20) defining the second position of the mask.

3. Luminous device (2) according to one of the preceding claims, **characterized in that** it comprises an actuator (17, 18) configured to move the mask (8, 9) in translation between its first position and its second position.

4. Luminous device (2) according to the preceding claim, **characterized in that**: - said actuator (17, 18) comprises an electromagnet, and the mask comprises an element made of ferromagnetic material configured to interact with the electromagnet, or **in that** - said actuator (17, 18) comprises a motor provided with a pinion, the mask comprising a toothing cooperating with said pinion.

5. Luminous device (2) according to one of the preceding claims, **characterized in that** the at least one pattern (24, 25, 26) of the slide (5) comprises at least one opaque zone (27) and at least one transparent zone (28, 28A, 28B, 28C, 28D), the opaque zone (29, 30) of the mask (8, 9) comprising a shape substantially homothetic to the shape of the at least one transparent zone of the slide to occlude the at least one transparent zone of the slide when the mask is in its second position.

6. Luminous device (2) according to one of the preceding claims, **characterized in that** the at least one pattern (24, 25, 26) of the slide (5) comprises an opaque zone (27), a first transparent zone (28A, 28B, 28C) and a second transparent zone (28D), the second transparent zone being separated from the first transparent zone by the opaque zone of the slide, the mask (8) comprising a transparent zone (31) extending opposite the first transparent zone of the slide and the opaque zone of the mask (29) extending opposite the second transparent zone of the slide when the mask is in its second position.

7. Luminous device (2) according to one of the preceding claims, **characterized in that** it comprises: - a first mask (8) provided with an opaque zone (29), the first mask being movable between a first position and a second position relative to the slide (5), and - at least one second mask (9) provided with an opaque zone (30), the second mask being movable between a first position and a second position relative to the slide (5), the opaque zone (29, 30) of the first mask and of the second mask extending outside a light beam (F) coming from the slide when the first mask and the second mask are in their first position to project a first image onto the ground, the opaque zone (29) of the first mask (8) extending through the light beam coming from the slide when the first mask is in its second position and the second mask is in its first position to project a second image onto the ground that is different from the first image, and the opaque zone (30) of the second mask (9) extending through the light beam coming from the slide when the second mask is in its second position to project a third image onto the ground that is different from the first image and from the second image.

8. Luminous device (2) according to one of the preceding claims, **characterized in that** the slide (5) comprises a first pattern (24) and at least one second pattern (25, 26), and **in that** the slide (5) is movable between a first position and a second position, the first pattern being arranged so as to be illuminated by the light source when the slide is in its first position, the second pattern being arranged so as to be illuminated by the light source when the slide is in its second position, the luminous device being capable of projecting a first image onto the ground when the slide is in its first position, and the luminous device being capable of projecting a fourth image onto the ground when the slide is in its second position.

9. Luminous device (2) according to the preceding claim, **characterized in that** the slide (5) comprises a generally circular shape, and **in that** the luminous device comprises an actuator configured to pivot the slide between its first position and its second position about a centre (O) of the slide.

10. Method of operating a luminous device (2) according to one of the preceding claims, **characterized in that** it comprises moving the at least one mask (8, 9) from its first position to its second position and then moving the at least one mask from its second position to its first position to produce a blinking effect of the image projected onto the ground.
